# EUROPÄISCHE PATENTSCHRIFT

(11) **EP 1 730 716 B1**
(45) Veröffentlichungstag und Bekanntmachung des Hinweises auf die Patenterteilung: **26.12.2012**
(21) Anmeldenummer: 05716331.3
(22) Anmeldetag: 23.03.2005
(51) Int. Cl.: G09F 9/00

(54) **ANZEIGEVORRICHTUNG**
DISPLAY DEVICE
DISPOSITIF D'AFFICHAGE

(30) Priorität: 29.03.2004 DE 102004016627
(43) Veröffentlichungstag der Anmeldung: 13.12.2006
(73) Patentinhaber: Gottlieb Binder GmbH & Co. KG, 71088 Holzgerlingen (DE)
(72) Erfinder: TUMA, Jan, 71083 Herrenberg (DE)
(74) Vertreter: Crazzolara, Helmut
(86) Internationale Anmeldenummer: PCT/EP2005/003106
(87) Internationale Veröffentlichungsnummer: WO 2005/093693

(56) Entgegenhaltungen:
- EP-A- 1 248 141
- WO-A-02/071382
- US-A- 5 287 215
- US-A- 5 818 998
- US-B1- 6 317 108
- US-B1- 6 402 336

## Beschreibung

Die Erfindung betrifft eine Anzeigevorrichtung mit einer Vielzahl von Bildpunkten zum Anzeigen von Stand- und Bewegtbildern, alphanumerischen Zeichen oder dergleichen, wobei die Bildpunkte mittels einer Ansteuerelektronik einzeln oder gruppenweise ansteuerbar sind, und wobei die Anzeigevorrichtung ein erstes flächiges Substrat aufweist.

Derartige Anzeigevorrichtungen sind beispielsweise auf dem Gebiet der Unterhaltungselektronik oder der Informationstechnik weit verbreitet. Die derzeit am häufigsten eingesetzte Technologie basiert auf Flüssigkristallen, die ansteuerbar als Lichtventile eingesetzt werden können und beispielsweise als so genannte LCDs (Liquid Crystal Displays) bei Computermonitoren, TV- und Videoanzeigeeinrichtungen, Informationstafeln und dergleichen eingesetzt werden. Alternative Technologien zur Realisierung der Bildpunkte sind beispielsweise die Plasmatechnologie oder der Einsatz von Leuchtdiodenarrays aus anorganischen Halbleitern.

Die bekannten Anzeigevorrichtungen werden in ein Gehäuse eingebaut, das auch dem Schutz der Anzeigevorrichtung dient. Soweit das Gehäuse als Standgehäuse ausgeführt ist, weist es entsprechende mechanische Stabilität auf. Im Falle einer Wandmontage, wie es beispielsweise in der Unterhaltungselektronik interessant ist, sind aufwendige Montagevorrichtungen erforderlich.

Die US 4,502,191 zeigt ein Bekleidungsstück, in dessen Deckstoff Öffnungen vorgesehen sind, durch die von der Rückseite Leuchtdioden einsteckbar sind. Die Leuchtdioden sind mit einer flexiblen Leiterplatte verbunden. Auf der Seite, auf der die Leuchtdioden von der Leiterplatte abstehen, ist auf der Leiterplatte ein Haftverschlussteil festgemacht, das eine Vielzahl von Haftverschlusselementen aufweist. Die Haftverschlusselemente stehen in Richtung der Leuchtdioden von dem Haftverschlussteil ab und sind für den Eingriff mit hakenförmigen Haftverschlusselementen eines zweiten Haftverschlussteils vorgesehen, das auf der Innenseite des Bekleidungsstücks angeordnet ist.

Die DE 202 15 401 U 1 zeigt einen Verbund aus einem Dünnsubstrat und einem Trägersubstrat durch Verkleben, durch adhäsive Kräfte, durch elektrostatische Kräfte oder durch Vakuum.

Die WO 02/35672 A2 zeigt ein elektrisches Kabel, auf dessen Oberfläche Haftverschlusselemente angeordnet sind, um das Kabel damit auf einer Trägeroberfläche festzulegen.

Die JP 2003-115388 A und die JP 2003-051383 A zeigen Schichtaufbauten für die Herstellen von organische Leuchtdioden, so genannten OLEDs.

Die US 5,818,998 A zeigt eine Anzeigevorrichtung, bei der die Bildpunkte jeweils durch das Ende eines Lichtleiters gebildet sind, das in einer auf einem flächigen Träger angeordneten Halteeinrichtung derart festgelegt ist, dass das Ende des Lichtleiters rechtwinklig zu dem flächigen Träger abstrahlt. Der flächige Träger weist an seinem Rand Befestigungsösen auf, durch die ein flexibles Befestigungskabel geführt ist, das in an einer Trägereinrichtung angeordneten Haken einhängbar ist und dadurch die Anzeigevorrichtung an der Trägereinrichtung festlegbar ist.

Die WO 02/071382 A1 zeigt ein flexibles Etikett mit einer Anzeigevorrichtung, bei der die Bildpunkte durch elektronische Tinte gebildet sind. Die Befestigung des Etiketts kann durch Verkleben, Vernähen oder auch durch Haftverschlüsse erfolgen, die an der Anzeigevorrichtung angebracht sind.

Die EP 1 248 141 A2 zeigt eine Anzeigevorrichtung, die mittels Haftverschlüssen an Kleidungsstücken lösbar festlegbar sind.

Die US 6,402,336 B1 zeigt eine Anzeigevorrichtung, bei der eine Decke eine Dekorschicht sowie Öffnungen für darin befestigte Leuchtmittel aufweist. An der Decke sind Haftverschlüsse angebracht, die mit an einer Trägereinrichtung angebrachten korrespondierenden Haftverschlüssen zusammenwirken.

Die US 6,317,108 B1 zeigt eine Anzeigevorrichtung nach dem Oberbegriff des Anspruchs 1 bei der die Bildpunkte durch elektrostatisch bewegbare und dabei den Eichtfluss modulierende Elektroden gebildet sind. Zur Festlegung an einer Trägereinrichtung können an der Anzeigevorrichtung Haftverschlüsse angebracht sein, die mit an der Trägereinrichtung angebrachten korrespondierenden Haftverschlüssen zusammenwirken.

Der Erfindung liegt die Aufgabe zugrunde, eine Anzeigevorrichtung bereitzustellen, welche die Nachteile des Standes der Technik überwindet, insbesondere die Befestigung vereinfacht und dadurch auch die Funktionalität und die Einsatzmöglichkeiten derartiger Anzeigevorrichtungen erhöht. Die Befestigung soll einfach und vorzugsweise ohne Werkzeug möglich sein. Die Befestigungsmittel sollen einfach und kostengünstig herstellbar sein und eine dauerhaft sichere Befestigung gewährleisten.

Die Aufgabe ist durch die im Anspruch 1 bestimmte Anzeigevorrichtung gelöst. Besondere Ausführungsarten der Erfindung sind in den Unteransprüchen bestimmt.

Erfindungsgemäß weist die Anzeigevorrichtung ein erstes flächiges Substrat auf, von dessen erster Oberfläche mindestens bereichsweise Haftverschlusselemente abstehen zum lösbaren Festlegen der Anzeigevorrichtung an einer Trägereinrichtung. Die Festlegekräfte können dabei durch mechanisches Verhaken und/oder durch chemische Bindungskräfte entstehen. Ein mechanisches Verhaken lässt sich beispielsweise mit Haftverschlusselementen erreichen, die durch ein formgebendes Verfahren unter einstückiger Ausbildung der Haftverschlusselemente zusammen mit einem flächigen Träger herstellen, wie es beispielsweise in der DE 196 46 318 A1 beschrieben ist.
Die Haftverschlusselemente können hakenförmig, pilzkopfförmig, schlaufenförmig oder sonstige entsprechende Verhakungsmittel aufweisen. Die Haftverschlusselemente des ersten flächigen Substrats können beispielsweise aus Haken, Pilzkopf, Schlaufen, Flausch oder dergleichen gebildet sein und können mit korrespondierenden Haftverschlusselementen der Trägereinrichtung zusammenwirken, wobei die Haftverschlusselemente des flächigen Substrats und der Trägereinrichtung identisch oder komplementär ausgebildet sein können, beispielsweise sind Verbindungen von Haken-Haken, Pilzkopf-Pilzkopf, Haken-Schlaufen oder Pilzkopf-Schlaufen möglich.

Alternativ oder ergänzend können die Haftverschlusselemente des ersten flächigen Substrats mit einer Oberfläche der Trägereinrichtung auch durch chemische Bindungskräfte zusammenwirken, insbesondere durch Van der Waalssche Kräfte oder Dipolkräfte zusammenwirken. Hierzu können beispielsweise einstückig mit dem flächigen Substrat ausgebildete Stängel an ihrem freien Ende in eine Vielzahl von Einzelfasern aufgeteilt sein, beispielsweise in mehrere Hundert Fasern je Stängel, wobei ein typischer Durchmesser einer solchen Faser weniger als 2 µm beträgt, vorzugsweise weniger als 1 µm und typischerweise etwa 0,2 µm. Die Länge der Einzelfasern beträgt vorzugsweise weniger als die Hälfte der Gesamtlänge des Stängels, insbesondere weniger als 35 % und vorzugsweise etwa 20 %. Das endseitige Teilen der Stängel kann auf unterschiedlichste Weisen erfolgen, beispielsweise durch mechanisches Schneiden, Bürsten, Aufpeitschen, Wasserstrahlschneiden, Laserschneiden, durch Aufsprengen infolge von kurzzeitigem starken Energieeintrag, durch chemisches Aufätzen oder dergleichen.

Die Haftverschlusselemente können auch so ausgebildet sein, dass die Enden der Stängel auf der zur Oberfläche der Trägereinrichtung gerichteten Stirnfläche eine plane oder sogar leicht konvexe Wölbung aufweisen, insbesondere die Stirnfläche gegenüber dem sich anschließenden Bereich der Stängel verbreitert ist. Durch eine taillienartige Verbreiterung der Enden der Stängel kann eine Art Sollknickstelle definiert sein, die ein Ablösen der Haftverschlusselemente von der Trägereinrichtung mit geringeren Kräften ermöglicht. Die Stirnflächen der Stängel wirken mit der Oberfläche der Trägereinrichtung durch Van der Waalssche Kräfte zusammen. Geeignete Kunststoffmaterialien für solche Haftverschlusselemente sind anorganische und organische Elastomere, insbesondere Polyvinylsiloxan, sowie additionsvernetzende Silikon-Elastomere, auch in der Form von ZweiKomponenten-Systemen sowie Acrylate. Auch der Einsatz von Kautschukmaterialien ist möglich.

Besonders günstig läßt sich das Herstellverfahren gestalten, wenn das jeweils verwendete Kunststoffmaterial thixotrop ist. Thixotropes Verhalten im Sinne der Erfindung soll dabei die Verringerung der Strukturstärke bedeuten während der Scherbelastungsphase und ihren mehr oder weniger schnellen aber vollständigen Wiederaufbau während der nachfolgenden Ruhephase. Dieser Abbau/Wiederaufbau-Zyklus ist ein vollständig reversibler Vorgang und thixotropes Verhalten ist als zeitabhängiges Verhalten definierbar. Ferner haben sich Kunststoffmaterialien als günstig erwiesen, bei denen die mit einem Rotationsviskosimeter gemessene Viskosität von 7.000 bis 15.000 mPas reicht, vorzugsweise jedoch ein Wert von etwa 10.000 mPas bei einer Scherrate von 10 1/sec aufweist. Im Sinne einer sich selbst abreinigenden Oberfläche hat es sich darüber hinaus als günstig erwiesen, Kunststoffmaterialien zu verwenden, deren Kontaktwinkel aufgrund ihrer Oberflächenenergie für die Benetzung mit Wasser mindestens einen Wert von größer 60° aufweist. Unter Umständen läßt sich die dahingehende Oberflächenenergie auch durch nachträgliche Beschichtungsverfahren noch weiter verändern.

In einer besonderen Ausführungsart der Erfindung sind die Haftverschlusselemente jedenfalls teilweise formwerkzeugfrei hergestellt. Ein zugehöriges Verfahren ist in DE 100 65 819 C1 und DE 101 06 705 C1 beschrieben. Hierbei wird ein Kunststoffmaterial mittels mindestens einer Auftragvorrichtung in aufeinanderfolgend abgegebenen Tröpfchen abgelagert, wobei die Orte der Ablagerung der Tröpfchen im Hinblick auf die Form der jeweils auszubildenden Haftverschlusselemente dreidimensional gewählt werden kann. Auf diese Weise lassen sich mit großer Formfreiheit beispielsweise in der Art eines Tintenstrahl-Druckverfahrens Hakenelemente, Pilzkopfelemente, Schlaufenelemente und dergleichen herstellen.

Vorzugsweise ist das erste flächige Substrat aus einem Kunststoff hergestellt, insbesondere aus einem thermoplastischen Kunststoff. Alternativ hierzu kann das erste flächige Substrat auch aus einem duroplastischen Kunststoff hergestellt sein, insbesondere im Fall von formwerkzeugfrei hergestellten Haftverschlusselementen. Die Haftverschlusselemente bestehen vorzugsweise aus dem gleichen Werkstoff wie das erste flächige Substrat. Grundsätzlich kommen insbesondere Polyethylene und Polypropylene in Betracht. Darüber hinaus kann ein Kunststoffmaterial gewählt werden, das ausgewählt ist aus der Gruppe der Acrylate wie Polymethacrylate, Polyethylen, Polypropylene, Polyoxymethylene, Polyvinyliden-fluorid, Polymethylpenten, Polyethylen-chlorotrifluoroethylen, Polyvinylfluorid, Polyethylenoxid, Polyethylenterephthalate, Polybutylenterephthalate, Nylon 6, Nylon 66 und Polybuten.

Vorzugsweise ist das erste flächige Substrat biegsam. Dadurch lassen sich biegsame, klappbare oder sogar aufrollbare Anzeigevorrichtungen realisieren. Dadurch ist die Festlegung der Anzeigevorrichtung an nahezu beliebig geformte Trägereinrichtungen möglich.

Vorzugsweise sind auf dem ersten flächigen Substrat die ansteuerbaren Bildpunkte und/oder mindestens ein Teil der Ansteuerelektronik angeordnet. Die Ansteuerelektronik kann insbesondere ein aktives Schaltelement, insbesondere einen Schalttransistor, je Bildpunkt aufweisen. In Abhängigkeit der für die Bildpunkten gewählten Technologie, beispielsweise Flüssigkristalle, elektronische Tinte oder Elektrolumineszenzelemente, kann jedenfalls ein Teil der Ansteuerelektronik und/oder der Bildpunkte durch gemeinsame Verfahrensschritte hergestellt werden, insbesondere durch aus der Dickschichttechnik oder Dünnschichttechnik bekannte Verfahrensschritte wie beispielsweise Bedampfen, Kathodenzerstäubung, Abscheiden aus der Gasphase, photolitographische Strukturierung und dergleichen.

Die ansteuerbaren Bildpunkte und/oder mindestens ein Teil der Ansteuerelektronik kann auf einer zweiten Oberfläche des ersten flächigen Substrats angeordnet sein, insbesondere gegenüberliegend der ersten Oberfläche. Bildpunkte und Ansteuerelektronik können nebeneinander oder übereinander angeordnet sein. Die Abstrahlrichtung oder Reflektionsrichtung kann durch entsprechende Reflektionsschichten oder Abdeckschichten vorgegeben sein. Grundsätzlich kann die Anzeigevorrichtung als Durchlichtanzeigevorrichtung, Reflektionsanzeigevorrichtung oder selbstleuchtende Anzeigevorrichtung ausgestaltet sein. In einer Ausführungsart weist die Anzeigevorrichtung weiterhin ein flächiges Leuchtmittel auf, welches in Folge des Zuführens von Energie, insbesondere elektrischer Energie, Licht emittiert. Beispielsweise kann ein flächiges Leuchtmittel vorgesehen sein in der Art einer Hintergrundbeleuchtung eines LCDs. Das flächige Leuchtmittel kann auch integral mit dem ersten flächigen Substrat ausgebildet sein, insbesondere kann die Leuchtschicht flächig auf einer Oberfläche des flächigen Substrats aufgebracht sein.

In einer Ausführungsart ist das flächige Leuchtmittel auf das erste flächige Substrat in Dünn- oder Dickschichttechnik aufgebracht, insbesondere aufgedruckt.

Die Bildpunkte können auf einem zweiten flächigen Substrat hergestellt sein, insbesondere getrennt von dem ersten flächigen Substrat mit seinen Haftverschlusselementen. In diesem Fall können die teilweise oder komplett hergestellten ersten und zweiten Substrate miteinander verbunden sein, insbesondere kann das zweite flächige Substrat mit dem ersten flächigen Substrat laminiert sein. Alternativ hierzu können die Bildpunkte auch auf dem ersten flächigen Substrat direkt aufgebracht werden, vorzugsweise nachdem auf dessen Rückseite bereits die Haftverschlusselemente angeordnet sind. In diesem Fall können die Haftverschlusselemente zur Fixierung des Substrats während des Herstellprozesses der Bildpunkte eingesetzt werden. In Abhängigkeit von der Technologie der Herstellung der Bildpunkte ist es auch möglich, in einem.Zwischenstadium oder nach Abschluss des Herstellens der Bildpunkte auf dem ersten flächigen Substrat die Haftverschlusselemente aufzubringen, beispielsweise durch Formgebung der Oberfläche des ersten flächigen Substrats oder durch formwerkzeugfreie Herstellung der Haftverschlusselemente wie vorstehend beschrieben.

In einer besonderen Ausführungsart der Erfindung wird auf dem ersten flächigen Substrat, das vorzugsweise bereits die Haftverschlusselemente aufweist, zunächst in Dickschicht- oder Dünnschichttechnik ein flächiges Leuchtmittel aufgebracht. Getrennt hiervon wird auf einem zweiten flächigen Substrat die eigentliche Anzeigevorrichtung mit den Bildpunkten und gegebenenfalls auch der Ansteuerelektronik aufgebracht, wobei auch elektrische Verbindungen zwischen der Ansteuerelektronik auf dem zweiten Substrat und dem Leuchtmittel auf dem ersten Substrat hergestellt werden können.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Zum Zweck der verständlicheren Darstellung sind die Zeichnungen nicht maßstabsgetreu.
- Fig. 1: zeigt schematisch einen Querschnitt durch ein erstes Ausführungsbeispiel der Anzeigevorrichtung,
- Fig. 2: zeigt schematisch einen Querschnitt durch ein zweites Ausführungsbeispiel der Anzeigevorrichtung,
- Fig. 3: zeigt ein weiteres Ausführungsbeispiel der erfindungsgemäß verwendeten Haftverschlusselemente, und
- Fig. 4: zeigt einen Querschnitt durch ein Haftverschlusselement der Fig. 3.

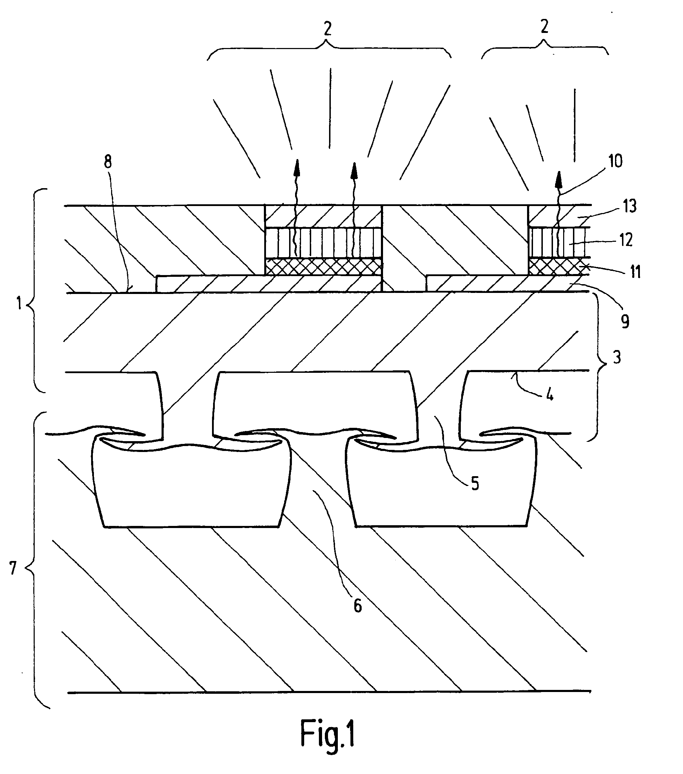

Die Fig. 1 zeigt schematisch einen Querschnitt durch ein erstes Ausführungsbeispiel der erfindungsgemäßen Anzeigevorrichtung 1 mit einer Vielzahl von Bildpunkten 2 zum Anzeigen von Stand- und Bewegtbildern, alphanumerischen Zeichen oder dergleichen. Die Bildpunkte 2 sind mittels einer in der Fig. 1 nicht näher dargestellten Ansteuerelektronik einzeln oder gruppenweise ansteuerbar, insbesondere in üblicher Form über Reihen und Spalten ansteuerbar. Insgesamt können beispielsweise eine Matrix von 640 x 480 Bildpunkte ansteuerbar sein, wobei für den Fall einer farbigen Anzeige jeder Bildpunkt aus drei Bildpunktelementen gebildet sein kann, beispielsweise jeweils ein Bildpunktelement für Rot, Grün und Blau. Von einem ersten flächigen Substrat 3 stehen von einer ersten Oberfläche 4 mindestens bereichsweise, vorzugsweise ganzflächig, Haftverschlusselemente 5 ab. Derartige Haftverschlusselemente 5 können einstückig von dem ersten flächigen Substrat 3 ausgebildet sein und beispielsweise gemäß dem in der DE 196 46 318 A1 beschriebenen Verfahren hergestellt sein.

Eine Trägereinrichtung, bei der es sich um einen Gestellrahmen, die Oberfläche eines Gehäuses oder auch um ein textiles Bekleidungsstück handeln kann, weist zum lösbaren Festlegen der Anzeigevorrichtung 1 ebenfalls Haftverschlusselemente 6 auf, welche mit den Haftverschlusselementen 5 des ersten flächigen Substrats 3 zusammenwirken, insbesondere in verhakenden Eingriff mit diesen zu bringen sind. Im dargestellten Ausführungsbeispiel sind die Haftverschlusselemente 6 der Trägereinrichtung identisch ausgebildet wie die Haftverschlusselemente 5 des ersten flächigen Substrats 3. Insbesondere sind auch die Haftverschlusselemente 6 einstückig mit einem Träger entsprechend der DE 196 46 318 A1 hergestellt in Form eines zweiten flächigen Substrats 7. Alternativ zum dargestellten Ausführungsbeispiel können die Haftverschlusselemente 5, 6 des ersten flächigen Substrats 3 und/oder der Trägereinrichtung auch hakenförmig, schlaufenförmig oder flauschartig ausgebildet sein. Die Haftverschlusselemente 5 des ersten flächigen Substrats 3 können auch in verhakenden Eingriff mit der Textur eines textilen Bekleidungsstücks, einer Möbelpolsterung, einer Wandverkleidung oder dergleichen gebracht werden.

Auf der der ersten Oberfläche 4 gegenüberliegenden Seite sind auf das erste flächige Substrat 3 in Dickschicht- oder Dünnschichttechnik Strukturschichten aufgebracht, aus denen die Bildpunkte 2 hergestellt sind. Insbesondere sind auf einer zweiten Oberfläche 8 erste elektrische Leiterbahnen 9 aufgebracht, welche eine Elektrode für die Bildpunkte 2 bilden, beispielsweise die Kathode. Auf die Kathode ist weiterhin eine bei Energiezufuhr Licht 10 emittierende Schicht 11 aufgebracht, bei der es sich auch um eine polymere Schicht handeln kann. Derartige lichtemittierende Polymerschichten sind beispielsweise aus der Produktinformation PHILIPS: "Polymer light-emitting diodes" bekannt. Oberhalb ist eine ladungsträgertransportierende Schicht 12 aufgebracht, die von einer transparenten elektrisch leitfähigen Elektrode 13, insbesondere der Anode, abgedeckt ist.

Beim Anlegen einer Spannung zwischen der ersten Leiterbahn 9 und der Elektrode 13 kommt es zur Emission von Licht 10. Die für die Herstellung der Bildpunkte 2 erforderlichen Schichten können beispielsweise durch Schleuderbeschichtung (spin coating) oder durch sonstige aus der Dick- und Dünnschichttechnik bekannten Verfahren mit anschließender Strukturierung hergestellt werden, oder auch bereits strukturiert unter Verwendung von Siebdruckverfahren oder Druckköpfen, wie sie aus der Tintenstrahltechnik bekannt sind.

Bei dem in der Fig. 1 dargestellten ersten Ausführungsbeispiel handelt es sich um eine selbstleuchtende Anzeigevorrichtung 1. Die Abstrahlung des Lichts 10 kann dabei grundsätzlich rundum erfolgen oder durch Abdeckschichten oder Reflektionsschichten nur in bestimmten, vorgebbaren Richtungen. Insbesondere ist es grundsätzlich auch möglich, das Licht 10 auch oder ausschließlich über die erste Oberfläche 4 der Anzeigevorrichtung 1 abzustrahlen, auf welcher sich die Haftverschlusselemente 5 befinden.

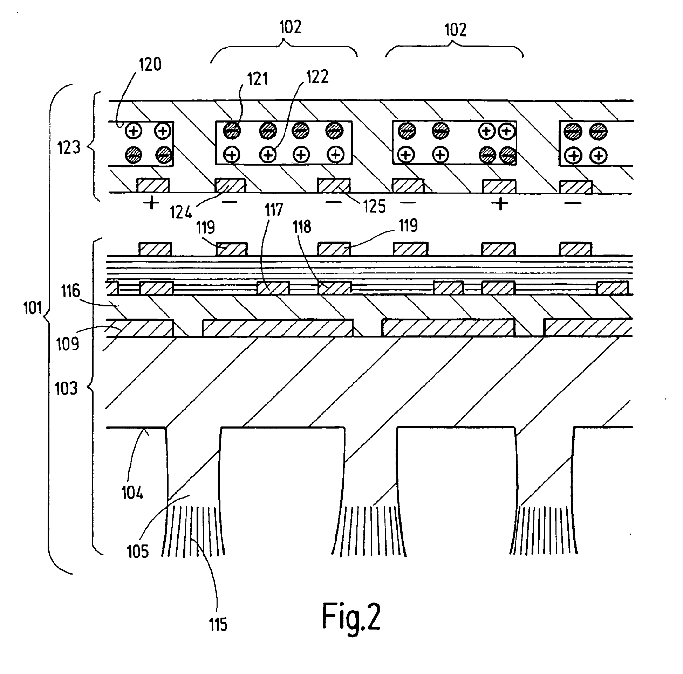

Die Fig. 2 zeigt ein zweites Ausführungsbeispiel einer erfindungsgemäßen Anzeigevorrichtung 101. Das erste flächige Substrat 103 weist dabei von der ersten Oberfläche 104 abstehende Haftverschlusselemente 105 auf, die an ihrem freien Ende eine Vielzahl von Einzelfasern 115 ausbilden. Aufgrund des gewählten Werkstoffes für die Haftverschlusselemente 105 treten an den Einzelfasern 115 chemische Bindungskräfte auf, insbesondere Dipolbindungskräfte oder Van der Waalssche Kräfte, mit denen die Anzeigevorrichtung 101 auch an Trägereinrichtungen festgelegt werden kann, die keine spezielle Oberflächenstruktur aufweisen, insbesondere selbst keine mechanischen Haftverschlusselemente ausbilden.

Auf der gegenüberliegenden Oberfläche sind auf das erste flächige Substrat 103 Strukturen aufgebracht, durch welche sich elektrische Schaltfunktionen realisieren lassen, insbesondere Feldeffekttransistoren. Die erste elektrische Leiterbahn 109 bildet dabei eine Steuerelektrode, insbesondere die Gate-Elektrode eines polymeren Feldeffekttransistors. Darüber befindet sich eine isolierende Schicht 116, welche die Gate-Isolierung bildet. Darauf sind jeweils Quellenelektroden 117 und Senkenelektroden 118 angeordnet, insbesondere die Source- und Drain-Elektrode des Feldeffekttransistors. Der Stromfluss zwischen der Quellenelektrode 117 und der Senkenelektrode 118 lässt sich über das Potenzial an der ersten Leiterbahn 109 steuern. Entsprechend dem Schaltzustand wird die zugehörige Ausgangselektrode 119 auf ein vorgebbares Potenzial geschaltet.

Auf das erste flächige Substrat 103 kann nun die eigentliche lichtsteuernde oder lichtemittierende Schicht aufgebracht werden, beispielsweise auch die im ersten Ausführungsbeispiel gezeigte Anordnung von Lumineszenzdioden, eine Anordnung von Flüssigkristallen, welche durch eine zellenartige Anordnung die einzelnen Bildpunkte repräsentieren, oder sonstige Anzeigemittel.

Im zweiten Ausführungsbeispiel der Fig. 2 werden die Bildpunkte 102 durch so genannte elektronische Tinte (electronic-ink) gebildet. Hierzu werden in einem zweiten flächigen Substrat 123 in Mikrokapseln 120 schwarze und weiße Partikel 121, 122 eingeschlossen, die unter dem Einfluss eines elektrischen Feldes innerhalb der Mikrokapsel 120 verschiebbar sind. Das hierzu erforderliche elektrische Feld wird durch Anschlusselektroden 124, 125 erzeugt, die für jeden Bildpunkt 102 paarweise vorgesehen sind. Durch Anlegen eines entsprechenden Potenzials an die Anschlusselektroden 124, 125 kommt es zu einer vorgebbaren Verteilung der schwarzen und weißen Partikel 121, 122 innerhalb der Mikrokapsel 120, die bei durchscheinendem oder reflektiertem Licht eine unterschiedliche visuelle Erscheinung ergeben.

Im dargestellten Ausführungsbeispiel kann das erste flächige Substrat 103 und das zweite flächige Substrat 123 separat hergestellt werden und in einem abschließenden Prozess wird das erste flächige Substrat 103 mit dem zweiten flächigen Substrat 123 fest verbunden, beispielsweise laminiert, verpresst, verklebt, aufgeschmolzen oder dergleichen. Bei dieser mechanischen Verbindung können auch die erforderlichen elektrischen Verbindungen zwischen dem ersten flächigen Substrat 103, das mindestens Teile der Ansteuerelektronik aufweist, und dem zweiten flächigen Substrat 123 hergestellt werden, beispielsweise durch Inanlagebringen der Ausgangselektroden 119 mit den Anschlusselektroden 124, 125.

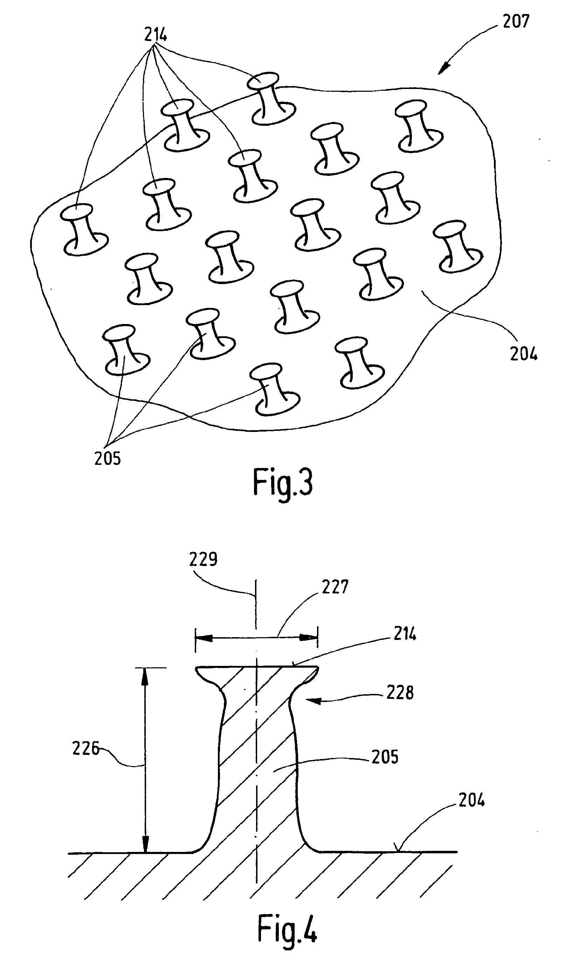

Die Fig. 3 zeigt ein weiteres Ausführungsbeispiel der erfindungsgemäß verwendeten Haftverschlusselemente 205 in der perspektivischen Ansicht der ersten Oberfläche 204 des ersten flächigen Trägers 207. Die Fig. 4 zeigt einen Querschnitt durch ein Haftverschlusselement 205.

Die Höhe 226 der Haftverschlusselemente 205 von der Oberfläche 204 bis zur vorzugsweise planen Stirnfläche 214 beträgt zwischen 20 und 500 µm, insbesondere zwischen 50 und 200 µm, vorzugsweise etwa 100 µm.
Die Erstreckung 227 der planen Stirnfläche 214 parallel zur Oberfläche 204 beträgt zwischen 10 und 250 µm, insbesondere zwischen 25 und 100 µm, vorzugsweise etwa 50 bis 60 µm. Zwischen 5 und 30 % der Höhe 226 von der Stirnfläche 214 beabstandet, insbesondere zwischen 10 und 20 %, vorzugsweise etwa 15 %, bildet das Haftverschlusselement 205 durch einen beispielsweise um etwa 10 bis 40 %, insbesondere etwa 20 bis 25 %, verringerten Querschnitt eine Art Sollknickstelle 228 aus, an welcher der Kopfteil mit der Stirnfläche 214 beim Ablösen des Haftverschlusselements 205 abknicken kann und so das Ablösen von der Oberfläche der Trägereinrichtung erleichtern kann. Die Abstände zwischen benachbarten Haftverschlusselementen 205 sind vorzugsweise geringer als die Erstreckung 227 der planen Stirnfläche 214, vorzugsweise betragen sie zwischen 50 und 80 % der Erstreckung 227.

Die Haftverschlusselemente 205 sind vorzugsweise symmetrisch zur Symmetrieachse 229, insbesondere rotationssymmetrisch. Sowohl die Kopfquerschnitte als auch die Stielquerschnitte können eckig sein, insbesondere mit einer hexagonalen Querschnittsform versehen sein, und das Aspektverhältnis eines Haftverschlusselements 205 liegt vorzugsweise zwischen 1:1,5 und 1:5.

## Patentansprüche

1. Anzeigevorrichtung (1; 101) mit einer Vielzahl von Bildpunkten (2; 102) zum Anzeigen von Stand- und Bewegtbildern, alphanumerischen Zeichen oder dergleichen, wobei die Bildpunkte mittels einer Ansteuerelektronik einzeln oder gruppenweise ansteuerbar sind, und wobei die Anzeigevorrichtung (1; 101) ein erstes flächiges Substrat (3; 103) aufweist, und wobei das erste flächige Substrat (3; 103) auf einer ersten Oberfläche (4; 104) mindestens bereichsweise von der ersten Oberfläche (4; 104) abstehende Haftverschlusselemente (5; 105) aufweist zum lösbaren Festlegen der Anzeigevorrichtung (1; 101) an einer Trägereinrichtung (7) durch Zusammenwirken der Haftverschlusselemente (5; 105) des ersten flächigen Substrats (3; 103) mit der Trägereinrichtung (7), **dadurch gekennzeichnet, dass** die Haftverschlusselemente (5; 105) einstückig von dem ersten flächigen Substrat (3; 103) ausgebildet sind, und dass auf dem die Haftverschlusselemente (5; 105) einstückig ausbildenden ersten flächigen Substrat (3; 103) außerdem die ansteuerbaren Bildpunkte (2; 102) und/oder mindestens ein Teil der Ansteuerelektronik angeordnet sind.

2. Anzeigevorrichtung (1; 101) nach Anspruch 1, **dadurch gekennzeichnet, dass** die Haftverschlusselemente (5; 105) des ersten flächigen Substrats (3; 103) mechanisch mit korrespondierenden Haftverschlusselementen (6) der Trägereinrichtung (7) zusammenwirken.

3. Anzeigevorrichtung (1; 101) nach Anspruch 1 oder 2, **dadurch gekennzeichnet, dass** die Haftverschlusselemente (5; 105) des ersten flächigen Substrats (3; 103) mit einer Oberfläche der Trägereinrichtung durch chemische Bindungskräfte zusammenwirken.

4. Anzeigevorrichtung (1; 101) nach einem der Ansprüche 1 bis 3, **dadurch gekennzeichnet, dass** die Haftverschlusselemente (5; 105) des ersten flächigen Substrats (3; 103) mit einer Oberfläche der Trägereinrichtung durch VAN DER WAALSsche Kräfte zusammenwirken.

5. Anzeigevorrichtung (1; 101) nach einem der Ansprüche 1 bis 4, **dadurch gekennzeichnet, dass** die Haftverschlusselemente (5; 105) formwerkzeugfrei hergestellt sind.

6. Anzeigevorrichtung (1; 101) nach einem der Ansprüche 1 bis 5, **dadurch gekennzeichnet, dass** das erste flächige Substrat (3; 103) aus einem Kunststoff besteht.

7. Anzeigevorrichtung (1; 101) nach einem der Ansprüche 1 bis 6, **dadurch gekennzeichnet, dass** das erste flächige Substrat (3; 103) aus einem thermoplastischen Kunststoff besteht.

8. Anzeigevorrichtung (1; 101) nach einem der Ansprüche 1 bis 6, **dadurch gekennzeichnet, dass** das erste flächige Substrat (3; 103) aus einem duroplastischen Kunststoff besteht.

9. Anzeigevorrichtung (1; 101) nach einem der Ansprüche 1 bis 8, **dadurch gekennzeichnet, dass** das erste flächige Substrat biegsam (3; 103) ist.

10. Anzeigevorrichtung (1; 101) nach einem der Ansprüche 1 bis 9, **dadurch gekennzeichnet, dass** die ansteuerbaren Bildpunkte (2; 102) und/oder mindestens ein Teil der Ansteuerelektronik auf einer zweiten Oberfläche (8) des ersten flächigen Substrats (3; 103) angeordnet sind.

11. Anzeigevorrichtung (1; 101) nach einem der Ansprüche 1 bis 10, **dadurch gekennzeichnet, dass** die Bildpunkte (2; 102) durch Flüssigkristalle, elektronische Tinte, Elektrolumineszenzelemente oder polymere Lumineszenzdioden gebildet sind.

12. Anzeigevorrichtung (1; 101) nach einem der Ansprüche 1 bis 11, **dadurch gekennzeichnet, dass** die Bildpunkte (2; 102) in Dünn- oder Dickschichttechnik hergestellt sind.

13. Anzeigevorrichtung (1; 101) nach einem der Ansprüche 1 bis 12, **dadurch gekennzeichnet, dass** die Bildpunkte (2; 102) auf einem zweiten flächigen Substrat (123) hergestellt sind, das mit dem ersten flächigen Substrat (3; 103) verbunden ist.

14. Anzeigevorrichtung (1; 102) nach einem der Ansprüche 1 bis 13, **dadurch gekennzeichnet, dass** die Anzeigevorrichtung (1; 101) weiterhin ein flächiges Leuchtmittel aufweist, welches in Folge des Zuführens von Energie Licht emittiert.

15. Anzeigevorrichtung (1; 101) nach Anspruch 14, **dadurch gekennzeichnet, dass** das flächige Leuchtmittel auf das erste flächige Substrat (3; 103) in Dünn- oder Dickschichttechnik aufgebracht ist.

16. Anzeigevorrichtung (1; 101) nach Anspruch 14 oder 15, **dadurch gekennzeichnet, dass** das flächige Leuchtmittel zwischen dem ersten flächigen Substrat (3; 103) und den Bildpunkten (2; 102) angeordnet ist.

## Claims

1. A display device (1; 101) with a plurality of pixels (2; 102) for displaying static and motion pictures, alphanumerical characters or the like, the pixels being triggerable by means of trigger electronics individually or in groups, and the display device (1; 101) having a first flat substrate (3; 103), and the first flat substrate (3; 103) having on a first surface (4; 104) adhesion closure elements (5; 105) which protrude at least in areas from the first surface (4; 104) for detachably securing the display device (1; 101) to a carrier means (7) by interaction of the adhesion closure elements (5; 105) of the first flat substrate (3; 103) with the carrier means (7), **characterised in that** the adhesion closure elements (5; 105) are made in one piece from the first flat substrate (3; 103), and that the triggerable pixels (2; 102) and/or at least part of the trigger electronics are located on the first flat substrate (3; 103) making the adhesion closure elements (5; 105) in one piece.

2. The display device (1; 101) according to Claim 1, **characterised in that** the adhesion closure elements (5; 105) of the first flat substrate (3; 103) interact mechanically with corresponding adhesion closure elements (6) of the carrier means (7).

3. The display device (1; 101) according to Claim 1 or 2, **characterised in that** the adhesion closure elements (5; 105) of the first flat substrate (3; 103) interact with a surface of the carrier means by chemical bonding forces.

4. The display device (1; 101) according to any of Claims 1 to 3, **characterised in that** the adhesion closure elements (5; 105) of the first flat substrate (3; 103) interact with a surface of the carrier means by Van der Waals forces.

5. The display device (1; 101) according to any of Claims 1 to 4, **characterised in that** the adhesion closure elements (5; 105) are produced without moulding tools.

6. The display device (1; 101) according to any of Claims 1 to 5, **characterised in that** the first flat substrate (3; 103) is made of a plastic.

7. The display device (1; 101) according to any of Claims 1 to 6, **characterised in that** the first flat substrate (3; 103) is made of a thermoplastic.

8. The display device (1; 101) according to any of Claims 1 to 6, **characterised in that** the first flat substrate (3; 103) is made of a duroplastic.

9. The display device (1; 101) according to any of Claims 1 to 8, **characterised in that** the first flat substrate is elastic (3; 103).

10. The display device (1; 101) according to any of Claims 1 to 9, **characterised in that** the triggerable pixels (2; 102) and/or at least part of the trigger electronics are located on a second surface (8) of the first flat substrate (3; 103).

11. The display device (1; 101) according to any of Claims 1 to 10, **characterised in that** the pixels (2; 102) are formed by liquid crystals, electronic ink, electroluminescence elements or polymeric luminescence diodes.

12. The display device (1; 101) according to any of Claims 1 to 11, **characterised in that** the pixels (2; 102) are produced in thin or thick film technology.

13. The display device (1; 101) according to any of Claims 1 to 12, **characterised in that** the pixels (2; 102) are produced on a second flat substrate (123) which is connected to the first flat substrate (3; 103).

14. The display device (1; 102) according to any of Claims 1 to 13, **characterised in that** the display device (1; 101) furthermore has a flat illuminant which emits light as a result of supplying energy.

15. The display device (1; 101) according to Claim 14, **characterised in that** the flat illuminant is applied to the first flat substrate (3; 103) in thin or thick film technology.

16. The display device (1; 101) according to Claim 14 or 15, **characterised in that** the flat illuminant is located between the first flat substrate (3; 103) and the pixels (2; 102).

## Revendications

1. Dispositif (1; 101) d'affichage ayant une pluralité de points (2; 102) d'image pour afficher des images immobiles et en mouvement, des signes alphanumériques ou analogues, les points d'image pouvant être commandés individuellement ou groupe par groupe au moyen d'une électronique de commande et le dispositif (1; 101) d'affichage ayant un premier substrat (3; 103) en nappe, et dans lequel le premier substrat (3; 103) en nappe a sur une première surface (4; 104), au moins par endroit, des éléments (5; 105) de fermeture auto-agrippante en saillie de la première surface (4; 104), pour la fixation amovible du dispositif (1; 101) d'affichage par un dispositif (7) de support par coopération des éléments (5; 105) de fermeture auto-agrippante de la première surface (3; 103) en nappe avec le dispositif (7) de support, **caractérisé en ce que** les éléments (5; 105) de fermeture auto-agrippante sont formés d'une seule pièce par le premier substrat (3; 103) en nappe et **en ce que**, sur le premier substrat (3; 103) en nappe formant d'une seule pièce des éléments (5; 105) de fermeture auto-agrippante, sont disposés, en outre, les points (2; 102) d'image pouvant être commandés et/ou au moins une partie de l'électronique de commande.

2. Dispositif (1; 101) d'affichage suivant la revendication 1, **caractérisé en ce que** les éléments (5; 105) de fermeture auto-agrippante du premier substrat (3; 103) en nappe coopèrent mécaniquement avec des éléments (6) correspondants de la fermeture auto-agrippante du dispositif (7) de support.

3. Dispositif (1; 101) d'affichage suivant la revendication 1 ou 2, **caractérisé en ce que** les éléments (5; 105) de fermeture auto-agrippante du premier substrat (3; 103) en nappe coopèrent avec une surface du dispositif de support par des forces de liaison chimique.

4. Dispositif (1; 101) d'affichage suivant l'une des revendications 1 à 3, **caractérisé en ce que** les éléments (5; 105) de fermeture auto-agrippante du premier substrat (3; 103) en nappe coopèrent avec une surface du dispositif de support par des forces de VAN DER WAALS.

5. Dispositif (1; 101) d'affichage suivant l'une des revendications 1 à 4, **caractérisé en ce que** les éléments (5; 105) de fermeture auto-agrippante sont fabriqués sans outil de formage.

6. Dispositif (1; 101) d'affichage suivant l'une des revendications 1 à 5, **caractérisé en ce que** le premier substrat (3; 103) en nappe est en une matière plastique.

7. Dispositif (1; 101) d'affichage suivant l'une des revendications 1 à 6, **caractérisé en ce que** le premier substrat (3; 103) en nappe est en une matière plastique thermoplastique.

8. Dispositif (1; 101) d'affichage suivant l'une des revendications 1 à 6, **caractérisé en ce que** le premier substrat (3; 103) en nappe est en une matière plastique thermodurcissable.

9. Dispositif (1; 101) d'affichage suivant l'une des revendications 1 à 8, **caractérisé en ce que** le premier substrat (3; 103) en nappe est souple.

10. Dispositif (1; 101) d'affichage suivant l'une des revendications 1 à 9, **caractérisé en ce que** les points (2; 102) d'image qui peuvent être commandés, et/ou au moins une partie de l'électronique de commande, sont disposés sur une deuxième surface (8) du premier substrat (3; 103) en nappe.

11. Dispositif (1; 101) d'affichage suivant l'une des revendications 1 à 10, **caractérisé en ce que** les points (2; 102) d'image sont formés par des cristaux liquides, des encres électroniques, des éléments électroluminescents ou des diodes électroluminescentes polymères.

12. Dispositif (1; 101) d'affichage suivant l'une des revendications 1 à 11, **caractérisé en ce que** les points (2; 102) d'image sont fabriqués suivant une technique en couche mince ou en couche épaisse.

13. Dispositif (1; 101) d'affichage suivant l'une des revendications 1 à 12, **caractérisé en ce que** les points (2; 102) d'image sont fabriqués sur un deuxième substrat (123) en nappe, qui est relié au premier substrat (3; 103) en nappe.

14. Dispositif (1; 101) d'affichage suivant l'une des revendications 1 à 13, **caractérisé en ce que** le dispositif (1; 101) d'affichage a, en outre, un agent luminescent en nappe, qui émet de la lumière à la suite de l'apport d'énergie.

15. Dispositif (1; 101) d'affichage suivant la revendication 14, **caractérisé en ce que** l'agent luminescent en nappe est déposé en technique en couche mince ou en couche épaisse sur le premier substrat (3; 103) en nappe.

16. Dispositif (1; 101) d'affichage suivant la revendication 14 ou 15, **caractérisé en ce que** l'agent luminescent en nappe est disposé entre le premier substrat (3; 103) en nappe et les points (2; 102) d'image.
